# EUROPÄISCHE PATENTSCHRIFT

(11) **EP 3 873 006 B1**
(45) Veröffentlichungstag und Bekanntmachung des Hinweises auf die Patenterteilung: **07.08.2024**
(21) Anmeldenummer: 21152520.9
(22) Anmeldetag: 20.01.2021
(51) Int. Cl.: H04B 10/114, H04B 10/116

(54) **VERFAHREN ZUR KOMMUNIKATION ZWISCHEN ZWEI NUTZFAHRZEUGEN**
METHOD FOR COMMUNICATION BETWEEN TWO COMMERCIAL VEHICLES
PROCÉDÉ DE COMMUNICATION ENTRE DEUX VÉHICULES UTILITAIRES

(30) Priorität: 28.02.2020 DE 102020202584
(43) Veröffentlichungstag der Anmeldung: 01.09.2021
(73) Patentinhaber: Deere & Company, Moline, IL 61265 (US)
(72) Erfinder: SCHOTT, FLORIAN, 68163 Mannheim (DE); FRITZ, NORBERT, 68163 Mannheim (DE); HOLLSTEIN, JUERGEN, 68163 Mannheim (DE)
(74) Vertreter: Dehnhardt, Florian Christopher

(56) Entgegenhaltungen:
- CN-A- 108 923 856
- US-A1- 2017 186 327
- US-A1- 2019 052 359

## Beschreibung

Die Erfindung betrifft ein Verfahren zur Kommunikation zwischen zwei Nutzfahrzeugen.

Aufgrund immer engerer Arbeitsfenster werden Feld- und Erntearbeiten in der Landwirtschaft mit mehreren Nutzfahrzeugen gleichzeitig durchgeführt und zunehmend teilweise in die Nacht verlagert. Dies geht einher mit einer zunehmend erforderlichen Abstimmung zwischen den Nutzfahrzeugen während deren gemeinsamen Arbeitseinsatzes.

Kommunikationsverfahren nach dem Stand der Technik sind aus den Druckschriften US-A-2017186327, US-A-2019052359 und CN108923856 bekannt.

Es ist daher Aufgabe der vorliegenden Erfindung, einen gemeinsamen Arbeitseinsatz mit mehreren Nutzfahrzeugen möglichst effizient zu gestalten.

Diese Aufgabe wird durch ein Verfahren mit den Merkmalen des Patentanspruchs 1 gelöst.

Weitere vorteilhafte Ausgestaltungen des erfindungsgemäßen Verfahrens gehen aus den Unteransprüchen hervor.

Gemäß Patentanspruch 1 verwendet das Verfahren zur Kommunikation zwischen zwei Nutzfahrzeugen eine optische Datenübertragung. Lichtsignale werden für eine kabellose Kommunikationstechnik verwendet. Hierbei generiert eine Steuereinheit eines ersten Nutzfahrzeuges in Abhängigkeit von den zu übertragenden Daten Ansteuersignale. Mittels der Ansteuersignale steuert die Steuereinheit eine Arbeitsleuchte (z.B. Scheinwerfer) des ersten Nutzfahrzeuges an. Die angesteuerte Arbeitsleuchte sendet Lichtsignale aus, welche die Übertragungsdaten repräsentieren. Mittels dieser ausgesendeten Lichtsignale kann das erste Nutzfahrzeug für den Arbeitseinsatz relevante Informationen bzw.

Daten (z.B. Positionsdaten und/oder andere Daten des ersten Nutzfahrzeugs) automatisiert an weitere Nutzfahrzeuge dieses Arbeitseinsatzes senden. Andere Nutzfahrzeuge des gemeinsamen Arbeitseinsatzes können somit über aktuelle Zustände des "sendenden" Nutzfahrzeugs automatisiert informiert werden. Hierdurch kann ein "empfangendes" Nutzfahrzeug, vorzugsweise ebenfalls automatisiert, eine für den gemeinsamen Arbeitseinsatz relevante technische Funktion anpassen. Dies unterstützt die strukturierte Koordinierung und Effizienz sowie einen störungsfreien Ablauf des gemeinsamen Arbeitseinsatzes. Folglich kann der gemeinsame Arbeitseinsatz besonders wirtschaftlich gestaltet werden.

Die optische Kommunikation ermöglicht es beispielsweise, eine unerwünschte gegenseitige Blendung mehrerer Nutzfahrzeuge bzw. gegenseitige Blendung ihrer Fahrer beim gemeinsamen Arbeitseinsatz (z.B. Feld- und Erntearbeiten während der Nacht) zuverlässig zu vermeiden. Hierzu wird von einem "empfangenden" Nutzfahrzeug beispielsweise in Abhängigkeit von den empfangenen Übertragungsdaten die Lichtleistung einer eigenen Arbeitsleuchte automatisiert verringert.

Die ohnehin am Nutzfahrzeug vorhandene(n) Arbeitsleuchte(n) wird bzw. werden bei dem Verfahren in einer Mehrfachfunktion nicht nur zur Ausleuchtung des Arbeitsfeldes sondern auch zur Datenübertragung genutzt. Hierdurch ist das Verfahren besonders kostengünstig ohne zusätzliche optische Sendeelemente durchführbar.

Die gesendeten optischen Daten sind insbesondere generierte Lichtfrequenzen, welche für das menschliche Auge sichtbar oder unsichtbar sein können.

Bei dem Verfahren sind vorzugsweise auch weitere, insbesondere sämtliche, Nutzfahrzeuge des gemeinsamen Arbeitseinsatzes als "Sender" und als "Empfänger" von Übertragungsdaten tätig. Hierdurch entsteht gewissermaßen ein Datennetzwerk mit aktuellen Informationen zwischen den beteiligten Nutzfahrzeugen, wodurch die Nutzfahrzeuge automatisiert technisch reagieren können, um den gemeinsamen Arbeitseinsatz hinsichtlich seiner Effizienz und Wirtschaftlichkeit zu unterstützen.

Vorzugsweise werden während des gemeinsamen Arbeitseinsatzes von mindestens einem ersten Nutzfahrzeug, insbesondere sämtlichen beteiligten Nutzfahrzeugen, Übertragungsdaten kontinuierlich gesendet. Hierdurch können andere beteiligte Nutzfahrzeuge kontinuierlich über die aktuelle Position oder einen aktuellen technischen Zustand des "sendenden" Nutzfahrzeugs informiert werden.

In einer bevorzugten Ausführungsform weist das erste Nutzfahrzeug neben seiner Senderfunktion auch mindestens eine optische Empfangseinheit auf, um von einem weiteren Nutzfahrzeug Lichtsignale bzw. optische Übertragungsdaten empfangen zu können.

Auf diese Weise ergibt sich eine bidirektionale optische Kommunikation zwischen jeweils zwei Nutzfahrzeugen, die sich im gemeinsamen Arbeitseinsatz befinden. Die optische Empfangseinheit enthält vorzugsweise einen oder mehrere Fotodetektor(en). Alternativ kann es sich bei der optischen Empfangseinheit auch um ein Kamerasystem handeln.

Vorzugsweise werden die von dem zweiten Nutzfahrzeug gesendeten Lichtsignale auf technisch geeignete Weise im ersten Nutzfahrzeug in ein definiertes Datenformat, also in Übertragungsdaten umgewandelt. Dies erfolgt z.B. mittels einer geeigneten Konverterfunktion in der Steuereinheit des ersten Nutzfahrzeugs.

Die vom zweiten Nutzfahrzeug gesendeten Lichtsignale bzw. Übertragungsdaten (z.B. aktuelle Position des zweiten Nutzfahrzeugs) können im ersten Nutzfahrzeug dazu dienen, dessen Arbeitsleuchte(n) zur Veränderung ihrer Lichtstärke anzusteuern. Hierdurch kann eine Blendung des zweiten Nutzfahrzeugs bzw. dessen Fahrers durch Scheinwerfer des ersten Nutzfahrzeugs automatisiert vermieden werden.

Vorzugsweise repräsentieren die von einem Nutzfahrzeug ausgesendeten Übertragungsdaten einen spezifischen Zustand dieses Nutzfahrzeugs, der für mindestens ein weiteres Nutzfahrzeug bei dem gemeinsamen Arbeitseinsatz als Information relevant ist. Dabei handelt es sich erfindungsgemäss um eine aktuelle geografische Position, oder beispielsweise um ein aktuelles technisches Merkmal, des "sendenden" Nutzfahrzeugs. Mit solchen automatisiert ausgesendeten Informationen kann die Koordinierung und Effizienz des gemeinsamen Arbeitseinsatzes weiter verbessert werden.

Die geografische Position als Übertragungsdaten basieren z.B. auf einem Positionserfassungssystem wie etwa GPS, wodurch das jeweilige Nutzfahrzeug seine Positionsdaten technisch einfach bereitstellen kann.

Das Verfahren wird mittels einer geeigneten Anordnung durchgeführt. Diese Anordnung zur Kommunikation zwischen zwei Nutzfahrzeugen mittels optischer Datenübertragung weist mindestens eine Steuereinheit und mindestens eine Arbeitsleuchte auf. Die Steuereinheit dient der Generierung von Ansteuersignalen in Abhängigkeit von den zu übertragenden Daten. Die mittels der vorgenannten Ansteuersignale ansteuerbare Arbeitsleuchte sendet Lichtsignale aus, welche die Übertragungsdaten repräsentieren.

Zur Durchführung des Verfahrens sind zumindest einige, insbesondere sämtliche an dem gemeinsamen Arbeitseinsatz beteiligten Nutzfahrzeuge jeweils mit der vorgenannten Anordnung ausgestattet.

Vorzugsweise enthält die Arbeitsleuchte eine oder mehrere LEDs. Mittels der Verwendung von LEDs lässt sich die optische Kommunikation bzw. Datenübertragung technisch besonders zuverlässig durchführen. Vorzugsweise werden die LEDs mit einer VLC-Technologie (Visible light communication) kombiniert, um die optische Datenübertragung durchzuführen.

Mit einer entsprechend geeigneten Anzahl von LEDs (z.B. Hochleistungs-LEDs) können einzelne Arbeitsleuchten bzw. Scheinwerfer ausgestattet und am Nutzfahrzeug derart angeordnet werden, dass die Arbeitsleuchten bzw. Scheinwerfer mit einer hohen Lichtleistung (z.B. bis zu 2000 Lumen) eine 360°-Ausleuchtung des Arbeitsfeldes ermöglichen.

Das Verfahren kann für unterschiedliche Arten von Nutzfahrzeugen verwendet werden, welche gemeinsam einen Arbeitseinsatz durchführen, beispielsweise in der Land- oder Forstwirtschaft, im Bereich Straßenbau, Bergwerk oder Mine.

Für den gemeinsamen Arbeitseinsatz ist das Nutzfahrzeug vorzugsweise Bestandteil einer Fahrzeugflotte mit mindestens zwei gleichartigen bzw. funktionsgleichen Nutzfahrzeugen. Das Nutzfahrzeug ist z.B. als landwirtschaftliches Nutzfahrzeug, insbesondere Traktor, Forstmaschine oder Baumaschine ausgebildet.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine schematische blockschaltbildartige Darstellung zweier miteinander kommunizierender Nutzfahrzeuge, und
- Fig. 2: zwei Traktoren mit Bestandteilen ein Anordnung zur optischen Kommunikation miteinander.

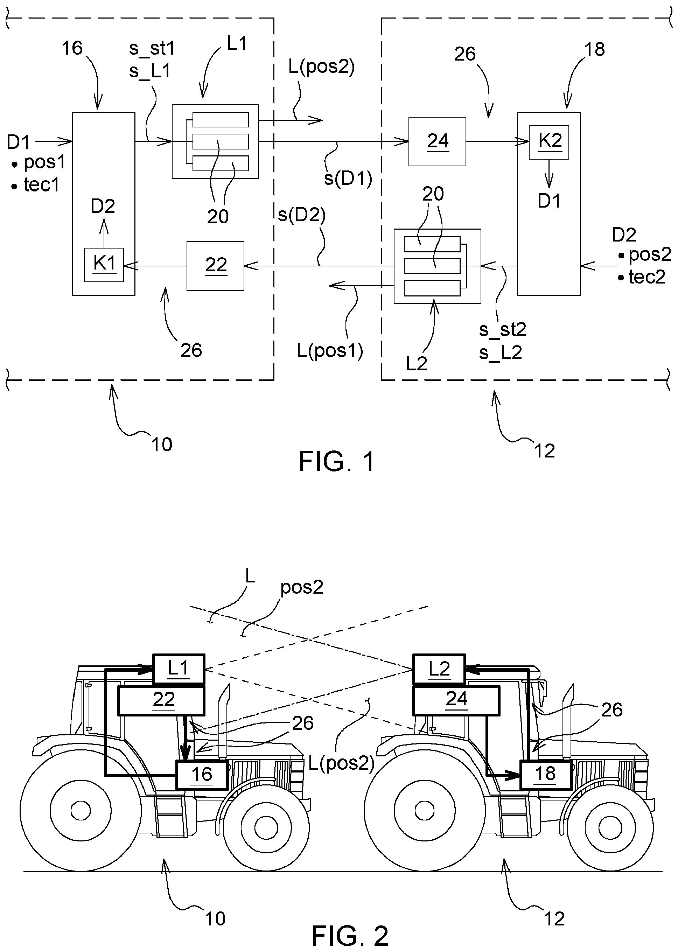

Fig. 1 zeigt schematisch ein erstes Nutzfahrzeug 10 und ein zweites Nutzfahrzeug 12, die miteinander über eine optische Datenübertragung miteinander kommunizieren. Eine Steuereinheit 16 des ersten Nutzfahrzeugs 10 erhält verschiedene Daten D1, die am Nutzfahrzeug 10 beispielsweise über einen CAN-Bus bereitgestellt werden. Entsprechend erhält eine Steuereinheit 18 des zweiten Nutzfahrzeugs 12 verschiedene Daten D2, die am Nutzfahrzeug 12 beispielsweise über einen CAN-Bus bereitgestellt werden.

Von den Daten D1 bzw. D2 sollen vorzugsweise die aktuelle Position pos1 bzw. pos2 und ein technischer Zustand tec1 bzw. tec2 des ersten Nutzfahrzeugs 10 bzw. des zweiten Nutzfahrzeugs 12 an das jeweils andere Nutzfahrzeug 12 bzw. 10 als Daten übertragen werden. Zu diesem Zweck generiert die Steuereinheit 16 bzw. 18 in Abhängigkeit der zu übertragenden Daten pos1 und tec1 bzw. pos2 und tec2 entsprechende Ansteuersignale s_st1 bzw. s_st2. Mit letzteren steuert die Steuereinheit 16 bzw. 18 eine Arbeitsleuchte L1 bzw. L2 an. Genauer gesagt werden eine Vielzahl von LEDs - hier sind lediglich schematisch und beispielhaft drei LEDs 20 dargestellt - angesteuert. Die derart angesteuerte Arbeitsleuchte L1 bzw. L2 sendet Lichtsignale s(D1) bzw. s(D2) aus, welche die Übertragungsdaten pos1 und tec1 bzw. die Übertragungsdaten pos2 und tec2 repräsentieren.

Auf vorbeschriebene Weise können auch mehr als eine Arbeitsleuchte L1 bzw. L2 eines Nutzfahrzeugs angesteuert werden, so dass eine Vielzahl anderer am gemeinsamen Arbeitseinsatz beteiligter Nutzfahrzeuge gleichzeitig beispielsweise über die aktuelle Position pos1 und den Zustand tec1 des ersten Nutzfahrzeugs 10 informiert werden. Bei Verwendung mehrerer unterschiedlich angeordneter Arbeitsleuchten L1 bzw. L2 am jeweiligen Nutzfahrzeug 10 bzw. 12 kann das jeweils andere Nutzfahrzeug 12 bzw. 10 auch unabhängig von seiner Relativposition zum "sendenden" Nutzfahrzeug zuverlässig informiert werden.

Weiterhin ist am ersten Nutzfahrzeug 10 eine optische Empfangseinheit 22, vorzugsweise in Form eines Fotodetektors, angeordnet. Sie dient dazu, Lichtsignale s(D2) des zweiten Nutzfahrzeugs 12 zu empfangen. Diese Lichtsignale s(D2) werden in einem Signalkonverter K1 in ein definiertes Datenformat umgewandelt. Die Steuereinheit 16 kann hierdurch Übertragungsdaten D2 lesen, welche von dem zweiten Nutzfahrzeug 12 gesendet werden. Hierbei handelt es sich z.B. um die aktuelle Position pos2 und mindestens ein technisches Zustandsmerkmal tec2 des zweiten Nutzfahrzeugs 12.

Der Signalkonverter K1 kann alternativ auch außerhalb der Steuereinheit 16 als physisch separate Einheit angeordnet sein.

Entsprechend der vorgenannten Beschreibung werden die vom ersten Nutzfahrzeug 10 gesendeten Übertragungsdaten D1 von einer optischen Empfangseinheit 24 des zweiten Nutzfahrzeugs 12 empfangen und in einem Signalkonverter K2 in ein definiertes Datenformat umgewandelt, so dass die Steuereinheit 18 die Übertragungsdaten D1 lesen kann.

Die jeweilige Steuereinheit 16 wertet erfindungsgemäss die empfangenen Übertragungsdaten D2 bzw. D1 aus und veranlasst technische Maßnahmen. Erfindungsgemäss ist eine dieser technische Massnahmen das Reduzieren (Dimmen) der Lichtleistung oder Lichtstärke der Arbeitsleuchte L1 bzw. L2, um ein Blenden des jeweils anderen Nutzfahrzeugs oder dessen Fahrers zu vermeiden.

In der Erfindung empfängt die Steuereinheit 16 die aktuelle Position pos2 des zweiten Nutzfahrzeugs 12 und ermittelt daraus eine Lichtstärke L(pos2), die für das zweite Nutzfahrzeug 12 oder dessen Fahrer als blendfrei wahrgenommen wird. Die Steuereinheit 16 steuert die Arbeitsleuchte L1 mit entsprechenden Steuersignalen s_L1 an, welche die gewünschte Lichtstärke L(pos2) generieren.

Entsprechend kann auch die Steuereinheit 18 mit Steuersignalen s_L2 auf eine aktuelle Position pos1 des ersten Nutzfahrzeugs 10 reagieren, damit die Arbeitsleuchte L2 eine für das erste Nutzfahrzeug 10 blendfreie Lichtstärke L(pos1) generiert.

In Fig. 2 fahren die beiden jeweils als Traktor ausgebildeten Nutzfahrzeuge 10, 12 hintereinander. Das zweite Nutzfahrzeug 12 sendet über seine Arbeitsleuchte L2 beispielsweise eine Lichtstärke L und seine aktuelle Position pos2 an die optische Empfangseinheit 22 des ersten Nutzfahrzeugs 10. Dessen Steuereinheit 16 steuert dann die Arbeitsleuchte L1 derart an, dass letztere mit einer ggf. veränderten Lichtstärke L(pos2) den Bereich des zweiten Nutzfahrzeugs 12 blendfrei beleuchtet.

Wie in Fig. 2 schematisch dargestellt, ist die Steuereinheit 16 bzw. 18 und die Arbeitsleuchte L1 bzw. L2 Bestandteil einer Anordnung 26, welche im Nutzfahrzeug 10 bzw. 12 integriert ist. Die Anordnung 26 kann technisch sinnvoll erweitert sein, z.B. mittels der Empfangseinheit 22 bzw. 24 und/oder weiteren technischen Bauteilen.

## Patentansprüche

1. Verfahren zur Kommunikation zwischen zwei Nutzfahrzeugen (10, 12), wobei
- die Kommunikation mittels einer optischen Datenübertragung (s(D1), s(D2)) erfolgt,
- eine Steuereinheit (16) eines ersten Nutzfahrzeugs (10) in Abhängigkeit von den zu übertragenden Daten (D1) Ansteuersignale (s_st1) generiert,
- eine Arbeitsleuchte (L1) des ersten Nutzfahrzeugs (10) mittels der Ansteuersignale (s_st1) angesteuert wird, und
- die angesteuerte Arbeitsleuchte (L1) an das zweite Nutzfahrzeug (12) Lichtsignale (s(D1)) aussendet, welche die Übertragungsdaten (D1) repräsentieren,
**dadurch gekennzeichnet, dass** die Steuereinheit (16) des ersten Nutzfahrzeugs (10) in Abhängigkeit von empfangenen Übertragungsdaten (D2), die eine aktuelle geografische Position (pos2) des zweiten Nutzfahrzeugs (12) repräsentieren, eine den Bereich des zweiten Nutzfahrzeugs 12 blendfrei beleuchtende Lichtstärke L(pos2) ermittelt, wobei die Steuereinheit (16) die Arbeitsleuchte (L1) mit entsprechenden Steuersignalen (s_L1) ansteuert, welche die gewünschte Lichtstärke L(pos2) generieren.

2. Verfahren nach Anspruch 1, **dadurch gekennzeichnet, dass** das erste Nutzfahrzeug (10) mittels einer optischen Empfangseinheit (22) Lichtsignale (s(D2)) des zweiten Nutzfahrzeugs (12) empfängt.

3. Verfahren nach Anspruch 2, **dadurch gekennzeichnet, dass** die optische Empfangseinheit (22) einen Fotodetektor enthält.

4. Verfahren nach Anspruch 2 oder 3, **dadurch gekennzeichnet, dass** die von der optischen Empfangseinheit (22) empfangenen Lichtsignale (s(D2)) des zweiten Nutzfahrzeugs (12) im ersten Nutzfahrzeug (10) in Übertragungsdaten (D2) umgewandelt werden.

5. Verfahren nach einem der vorhergehenden Ansprüche, **dadurch gekennzeichnet, dass** die von einem Nutzfahrzeug (10, 12) ausgesendeten Übertragungsdaten (D1, D2) neben der geografischen Position (pos1, pos2) einen technischen (tec1, tec2) Zustand dieses Nutzfahrzeugs (10, 12) repräsentieren.

6. Anordnung (26) zur Kommunikation zwischen ersten und zweiten Nutzfahrzeugen (10, 12) mittels optischer Datenübertragung (s(D1), s(D2)), mit
- einer Steuereinheit (16, 18) zur Generierung von Ansteuersignalen (s_st1, s_st2) in Abhängigkeit von den zu übertragenden Daten (D1, D2),
- einer mittels der Ansteuersignale (s_st1, s_st2) der Steuereinheit (16, 18) ansteuerbaren Arbeitsleuchte (L1, L2) zur Aussendung von Lichtsignalen (s(D1), s(D2)), welche die Übertragungsdaten (D1, D2) repräsentieren, **dadurch gekennzeichnet, dass** die Steuereinheit (16) des ersten Nutzfahrzeugs (10) so eingerichtet ist, dass sie in Abhängigkeit von empfangenen Übertragungsdaten (D2), die eine aktuelle geografische Position (pos2) des zweiten Nutzfahrzeugs (12) repräsentieren, eine Lichtstärke L(pos2) ermittelt, die für das zweite Nutzfahrzeug (12) oder dessen Fahrer als blendfrei wahrgenommen wird, wobei die Steuereinheit (16) die Arbeitsleuchte (L1) mit entsprechenden Steuersignalen (s_L1) ansteuert, welche die gewünschte Lichtstärke L(pos2) generieren.

7. Anordnung nach Anspruch 6, **dadurch gekennzeichnet, dass** die Arbeitsleuchte (L1, L2) mindestens eine LED enthält.

8. Nutzfahrzeug (10, 12) mit einer Anordnung (26) nach Anspruch 6 oder 7.

9. Nutzfahrzeug nach Anspruch 8, **dadurch gekennzeichnet, dass** es als ein landwirtschaftliches Nutzfahrzeug ausgebildet ist.

## Claims

1. Method for communication between two utility vehicles (10, 12), wherein
- the communication takes place by means of an optical data transmission (s(D1), s(D2)),
- a control unit (16) of a first utility vehicle (10) generates activation signals (s_st1) in dependence on the data (D1) to be transmitted,
- a work light (L1) of the first utility vehicle (10) is activated by means of the activation signals (s_st1), and
- the activated work light (L1) emits light signals (s(D1)) to the second utility vehicle (12), which represent the transmission data (D1),
**characterized in that** the control unit (16) of the first utility vehicle (10) determines a light intensity L(pos2) illuminating the region of the second utility vehicle (12) without dazzling, in dependence on received transmission data (D2) representing a current geographical position (pos2) of the second utility vehicle (12), wherein the control unit (16) activates the work light (L1) using corresponding control signals (s_L1), which generate the desired light intensity L(pos2).

2. Method according to Claim 1, **characterized in that** the first utility vehicle (10) receives light signals (s(D2)) of the second utility vehicle (12) by means of an optical receiving unit (22).

3. Method according to Claim 2, **characterized in that** the optical receiving unit (22) contains a photodetector.

4. Method according to Claim 2 or 3, **characterized in that** the light signals (s(D2) of the second utility vehicle (12) received by the optical receiving unit (22) are converted in the first utility vehicle (10) into transmission data (D2).

5. Method according to one of the preceding claims, **characterized in that** the transmission data (D1, D2) emitted by a utility vehicle (10, 12) represent a technical status (tec1, tec2), in addition to the geographical position (pos1, pos2), of this utility vehicle (10, 12).

6. Arrangement (26) for communication between first and second utility vehicles (10, 12) by means of optical data transmission (s(D1), s(D2)), having
- a control unit (16, 18) for generating activation signals (s_st1, s_st2) in dependence on the data (D1, D2) to be transmitted,
- a work light (L1, L2) activatable by means of the activation signals (s_st1, s_st2) of the control unit (16, 18) to emit light signals (s(D1), s(D2)), which represent the transmission data (D1, D2), **characterized in that** the control unit (16) of the first utility vehicle (10) is configured such that it determines a light intensity L(pos2) perceived as non-dazzling for the second utility vehicle (12) or its driver, in dependence on received transmission data (D2) representing a current geographical position (pos2) of the second utility vehicle (12), wherein the control unit (16) activates the work light (L1) using corresponding control signals (s_L1), which generate the desired light intensity L(pos2) .

7. Arrangement according to Claim 6, **characterized in that** the work light (L1, L2) contains at least one LED.

8. Utility vehicle (10, 12) having an arrangement (26) according to Claim 6 or 7.

9. Utility vehicle according to Claim 8, **characterized in that** it is designed as an agricultural utility vehicle.

## Revendications

1. Procédé de communication entre deux véhicules utilitaires (10, 12), dans lequel
- la communication s'effectue au moyen d'une transmission de données optique (s(D1), s(D2)),
- une unité de commande (16) d'un premier véhicule utilitaire (10) génère des signaux de pilotage (s_st1) en fonction des données à transmettre (D1),
- une lampe de travail (L1) du premier véhicule utilitaire (10) est pilotée au moyen des signaux de pilotage (s_st1), et
- la lampe de travail (L1) pilotée émet vers le deuxième véhicule utilitaire (12) des signaux lumineux (s(D1)) qui représentent les données de transmission (D1),
**caractérisé en ce que** l'unité de commande (16) du premier véhicule utilitaire (10) établit en fonction de données de transmission (D2) reçues, qui représentent une position géographique actuelle (pos2) du deuxième véhicule utilitaire (12), une intensité de lumière L(pos2) qui éclaire la zone du deuxième véhicule utilitaire (12) sans éblouissement, dans lequel l'unité de commande (16) pilote la lampe de travail (L1) avec des signaux de commande (s_L1) correspondants qui génèrent l'intensité de lumière L(pos2) souhaitée.

2. Procédé selon la revendication 1, **caractérisé en ce que** le premier véhicule utilitaire (10) reçoit au moyen d'une unité de réception optique (22) des signaux lumineux (s(D2)) du deuxième véhicule utilitaire (12).

3. Procédé selon la revendication 2, **caractérisé en ce que** l'unité de réception optique (22) comporte un photodétecteur.

4. Procédé selon la revendication 2 ou 3, **caractérisé en ce que** les signaux lumineux (s(D2)) du deuxième véhicule utilitaire (12), reçus par l'unité de réception optique (22), sont convertis en données de transmission (D2) dans le premier véhicule utilitaire (10).

5. Procédé selon l'une quelconque des revendications précédentes, **caractérisé en ce que** les données de transmission (D1, D2) émises par un véhicule utilitaire (10, 12) représentent en plus de la position géographique (pos1, pos2) un état technique (tec1, tec2) de ce véhicule utilitaire (10, 12).

6. Agencement (26) de communication entre un premier et un deuxième véhicule utilitaire (10, 12) au moyen d'une transmission de données optique (s(D1), s(D2)), comprenant
- une unité de commande (16, 18) pour générer des signaux de pilotage (s_st1, s_st2) en fonction des données à transmettre (D1, D2),
- une lampe de travail (L1, L2), pouvant être pilotée au moyen des signaux de pilotage (s_st1, s_st2) de l'unité de commande (16, 18), pour émettre des signaux lumineux (s(D1), s(D2)) qui représentent les données de transmission (D1, D2), **caractérisé en ce que** l'unité de commande (16) du premier véhicule utilitaire (10) est conçue de telle sorte qu'elle établit en fonction de données de transmission (D2) reçues, qui représentent une position géographique actuelle (pos2) du deuxième véhicule utilitaire (12), une intensité de lumière L(pos2) qui est perçue comme non éblouissante par le deuxième véhicule utilitaire (12) ou son conducteur, dans lequel l'unité de commande (16) pilote la lampe de travail (L1) avec des signaux de commande (s_L1) correspondants qui génèrent l'intensité de lumière L(pos2) souhaitée.

7. Agencement selon la revendication 6, **caractérisé en ce que** la lampe de travail (L1, L2) comporte au moins une LED.

8. Véhicule utilitaire (10, 12) comprenant un agencement (26) selon la revendication 6 ou 7.

9. Véhicule utilitaire selon la revendication 8, **caractérisé en ce qu'**il est réalisé sous la forme d'un véhicule utilitaire agricole.
